(19) Europäisches Patentamt
European Patent Office
Office européen des brevets

(11) **EP 1 978 122 B1**

(12) **EUROPEAN PATENT SPECIFICATION**

(45) Date of publication and mention
of the grant of the patent:
**25.05.2016 Bulletin 2016/21**

(21) Application number: **07714047.3**

(22) Date of filing: **06.02.2007**

(51) Int Cl.:
*C22C 38/00* [(2006.01)]    *C21D 9/46* [(2006.01)]
*H01F 1/147* [(2006.01)]    *C21D 6/00* [(2006.01)]
*C21D 8/02* [(2006.01)]    *C21D 8/04* [(2006.01)]
*C21D 8/12* [(2006.01)]    *C22C 38/02* [(2006.01)]
*C22C 38/04* [(2006.01)]    *C22C 38/06* [(2006.01)]
*G10K 11/162* [(2006.01)]

(86) International application number:
**PCT/JP2007/052439**

(87) International publication number:
**WO 2007/097217 (30.08.2007 Gazette 2007/35)**

(54) **DAMPING ALLOY SHEET AND PROCESS FOR PRODUCING THE SAME**

DÄMPFUNGSLEGIERUNGSBLECH UND HERSTELLUNGSVERFAHREN DAFÜR

FEUILLE D'ALLIAGE D'AMORTISSEMENT ET PROCÉDÉ DE PRODUCTION DE CELLE-CI

(84) Designated Contracting States:
**DE FR GB**

(30) Priority: **21.02.2006 JP 2006043712**

(43) Date of publication of application:
**08.10.2008 Bulletin 2008/41**

(73) Proprietor: **JFE Steel Corporation
Tokyo, 100-0011 (JP)**

(72) Inventors:
• **FUJITA, Koichiro
Tokyo 100-0011 (JP)**
• **INOUE, Tadashi
Tokyo 100-0011 (JP)**

(74) Representative: **Hoffmann Eitle
Patent- und Rechtsanwälte PartmbB
Arabellastraße 30
81925 München (DE)**

(56) References cited:
JP-A- 03 183 741    JP-A- 05 329 506
JP-A- H05 331 540    JP-A- 2000 234 152
JP-A- 2002 294 408    US-A- 5 348 701

EP 1 978 122 B1

**Description**

TECHNICAL FIELD

The present invention relates to a damping alloy steel sheet which has excellent damping capacity without requiring expensive additive elements, and a method for producing the same.

BACKGROUND ART

The need to reduce noise and vibration is increasing in products, such as automobiles and electrical machinery, which use steel sheet (thin plate) having a thickness of 2.0 mm or less, joining products such as ships, bridges, industrial machinery and buildings which use mainly thick steel plate and which have long had this need. Consequently, various measures have been taken. One of the measures is material damping. The material damping is a way of reducing (damping) vibration by converting vibration energy into thermal energy in a material which then is dissipated.

One damping material for the material damping is a constrained layer type damping steel sheet in which resin is sandwiched between steel sheets. The constrained layer type damping steel sheet has a damping effect due to the shear deformation of the resin, and has a high loss factor which is an index of damping capacity, and has actually been used many times. However, since it has problems of having low productivity and poor weldability and workability, its application is limited.

A steel-based damping material excellent in weldability and workability is a ferromagnetic type damping alloy utilizing hysteresis of domain wall movement. For instance, Patent Documents 1 to 3 disclose a high alloy which contains at least one element selected from ferrite formers such as Al, Si, and Cr with a total concentration of at least 1%.

Patent Document 3 further discloses an alloy with a very expensive element such as Co. The purpose of adding a ferrite former such as Al, Si, and Cr can be summarized in two points:

i) raising the loss factor by raising the magnetostriction constant, and
ii) grain coarse growth, achieved by restraining reverse transformation to austenite during high temperature annealing, thereby raising the loss factor.

However, in the case of the high alloy described in Patent Document 1, a sheet having a high loss factor and a thickness of 2.0 mm or less cannot always be obtained. The high alloy described in Patent Documents 2 and 3 is not preferable because an expensive element such as Cr and Co is added, which leads to increase in the production cost and low productivity. Patent Documents 4 to 8 disclose a damping alloy or a constrained layer type damping steel sheet which have a relatively small amount of elements such as Al, Si and Cr. However, such technique cannot always provide a sheet having a high loss factor and a thickness of 2.0 mm or less.

Among the Patent Documents described above, only Patent Document 2 describes a sheet having a thickness of 2.0 mm or less, and almost no knowledge about ferromagnetic type damping alloy sheets is available. Moreover, for products such as automobiles and electrical machinery, cold-rolled steel sheets need to be used due to exacting requirements regarding surface texture and thickness tolerance in sheets having a thickness of 2.0 mm or less. However, almost no knowledge about a damping alloy steel sheet which is produced with a machine for producing a cold-rolled steel sheet has been disclosed.

Patent Document 1: Japanese Unexamined Patent Publication No. 4-99148
Patent Document 2: Japanese Unexamined Patent Publication No. 52-73118
Patent Document 3: Japanese Unexamined Patent Publication No. 2002-294408
Patent Document 4: Japanese Unexamined Patent Publication No. 2000-96140
Patent Document 5: Japanese Unexamined Patent Publication No. 10-140236
Patent Document 6: Japanese Unexamined Patent Publication No. 9-143623
Patent Document 7: Japanese Unexamined Patent Publication No. 9-176780
Patent Document 8: Japanese Unexamined Patent Publication No. 9-104950

DISCLOSURE OF THE INVENTION

The present invention has been made under these circumstances, with the objective of providing a steel-based damping alloy steel sheet having a thickness of 2.0 mm or less, a loss factor of 0.040 or more, and favorable damping capacity, with no need of expensive additive elements such as Cr and Co, and a method for producing the same.

The present inventors have conducted intensive studies on the damping capacity of ferromagnetic type damping alloy steel sheets, and as a result, they have found that a damping alloy steel sheet which has a high loss factor of 0.040 or more can be obtained by controlling the grain diameter, maximum permeability, and residual induction, without adding expensive alloy elements such as Cr and Co.

The present invention has been made on the basis of such knowledge, and provides a damping alloy steel sheet which has a thickness of 2.0 mm or less including:

the following elements: C: 0.005% or less, Mn: 0.05 to 1.5%, P: 0.2% or less, S: 0.02% or less, N: 0.005% or less, and at least one of Si: 1.0 to 3.5% and Sol. Al: 1.0 to 7.0% by mass, the remainder being Fe and inevitable impurities;
an average grain diameter of 50 to 500 $\mu$m;
maximum permeability of 2,000 or more; and
residual induction of 0.90 T or less.

The damping alloy steel sheet of the invention can be produced by, for example, the method in which steel having the chemical composition described above is hot-rolled, pickled, cold-rolled, heated at a temperature which is no lower than recrystallization temperature and lower than the $Ac_1$ transformation point during continuous annealing, so that the average grain diameter is 50 to 500 $\mu$m, and cooled under tension of 0.1 to 4.9 MPa to achieve maximum permeability of 2,000 or more and residual induction of 0.90 T or less.

The present invention can provide a steel-based damping alloy steel sheet which has a high loss factor of 0.040 or more without adding expensive alloy elements such as Cr and Co. Also, the damping alloy steel sheet according to the invention is suitable for applications using a sheet having a thickness of 2.0 mm or less such as automobiles and electrical machinery.

BRIEF DESCRIPTION OF THE DRAWING

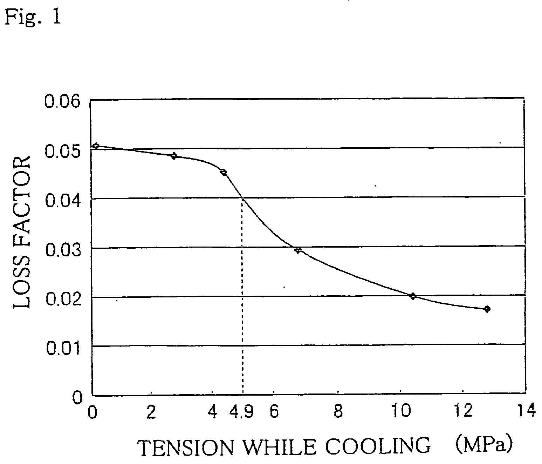

Fig. 1 is a graph showing the relationship between the tension upon annealing and cooling and the loss factor.

BEST MODE FOR CARRYING OUT THE INVENTION

The steel-based damping alloy steel sheet of the present invention is characterized in that a domain wall is moved to great effect when vibration is applied, so that a high damping capacity is obtained. To accomplish this, the point of the invention is to reduce residual stress and plastic strain in a grain which make it difficult to move a domain wall. In the case where the residual stress exists, since a magnetic domain structure freezes to ease the residual stress, the domain wall does not move effectively upon receiving vibration, and thereby the damping capacity decreases. In the case where the plastic strain exists, since the plastic strain impedes the movement of the domain wall, the domain wall does not move effectively upon receiving vibration, and thereby the damping capacity decreases.

The present inventors have conducted studies on the loss factor of steel-based damping alloy steel sheet containing 1% or more of inexpensive Al or Si which are elements having the effect of increasing a magnetostriction constant, with a view to avoid the freezing of magnetic domain structure and reduce the plastic strain. Consequently, as described above, they have found that the loss factor is closely related to the maximum permeability and the residual induction. Hereinafter, the present invention is illustrated in detail.

(1) Material components (hereafter, '%' means '% by mass')

C: when C content is over 0.005%, carbide is formed which impedes the movement of the domain wall. Accordingly, the C content is 0.005% or less, and preferably 0.003% or less.

Mn: Mn is an element which forms a sulfide and improves hot brittleness, and also is a solid solution strengthening element. Consequently, the Mn content needs to be 0.05% or more. On the other hand, since addition of a large quantity worsens workability, the upper limit of the Mn content is 1.5%.

P: P is a solid solution strengthening element, but if P content is over 0.2%, the workability deteriorates. Accordingly, the upper limit of the P content is 0.2%.

S: When S content exceeds 0.02%, sulfide is formed which impedes the movement of a domain wall. In addition, the grain growth remarkably deteriorates. Accordingly, the S content is 0.02% or less, preferably 0.005% or less, and more preferably less than 0.003%.

N: When N content exceeds 0.005%, a precipitate is formed which impedes the movement of a domain wall. Therefore, the N content is 0.005% or less, preferably 0.003% or less, and still more preferably as small as possible.

Si, Sol. Al: Si and Sol. Al each are solid solution strengthening elements, and are highly effective elements for increasing the magnetostriction constant and improving the loss factor. However, excessive amounts significantly worsen cold rollability. As a consequence, it is necessary that Si 1.0 to 3.5% or Sol. Al 1.0 to 7.0% or both is contained therein.

The remainder of the alloy is Fe and inevitable impurities. However, the elements Ti, Nb and Zr in particular form a fine precipitate and impedes grain growability, and thereby reduce grain diameter. Consequently, the content of each of these elements is preferably less than 0.003%, and more preferably less than 0.001%.

(2) Average Grain Diameter

Since the vibration is reduced by promoting movement of a domain wall in the damping alloy steel sheet of the invention, the grain boundary that impedes the domain wall movement is preferably small, the smaller the better, meaning that the larger the grain diameter the better. In order to move the domain wall effectively and obtain a high loss factor of 0.040 or more, the average grain diameter needs to be 50 $\mu$m or more. On the other hand, excessive growth in the grain diameter leads to orange peel during manufacture, and therefore the average grain diameter needs to be 500 $\mu$m or less.

(3) Maximum Permeability

Another factor that impedes the movement of a domain wall is the plastic strain in grains, in addition to the above-mentioned precipitate material and grain boundary. The plastic strain in grains is closely related with the maximum permeability. In order to reduce the plastic strain to a level which presents no substantial obstacle to the movement of a domain wall, and to obtain a high loss factor of 0.040 or more, the maximum permeability needs to be 2,000 or more.

(4) Residual Induction

Furthermore, in the case where residual stress exists in a grain, since a magnetic domain structure freezes in a manner of easing the residual stress by orienting a positive magnetostrictive direction in a stress direction, the damping capacity decreases. The residual stress in a grain is closely related with the maximum permeability. In order to reduce the residual stress to a level which does not freeze the magnetic domain structure, and to obtain a high loss factor of 0.040 or more, the residual induction needs to be 0.90 T or less.

(5) Production Method

The damping alloy steel sheet of the invention can be produced by, for example, the method in which a steel alloy having the chemical composition described above is hot-rolled, pickled, cold-rolled, and heated at a temperature no lower than the recrystallization temperature and lower than the $Ac_1$ transformation point during continuous annealing, and cooled under tension of 0.1 to 4.9 MPa.

For the hot rolling, it is preferable that steel is first heated to a temperature of 1,000 to 1,150°C, after which rolling is conducted at a finishing temperature of 700°C or higher. It is difficult to ensure a finishing temperature of 700°C or higher when the heating temperature is 1,000°C or lower. When the heating temperature is 1,150°C or higher, a small amount of impurities is dissolved into the solid and reprecipitates in slight amounts upon hot rolling or the subsequent winding up into a roll, and thereby grain growth upon annealing may be impeded. In addition, the shape of the plate is apt to deteriorate when the finishing temperature is lower than 700°C. In order to prevent ridging of a hot-rolled sheet after hot rolling, the sheet may be annealed at a temperature between 650 and 850°C.

A hot-rolled sheet after hot rolling or a hot-rolled sheet after hot-rolled sheet annealing is pickled by a usual method, and cold rolling yields a cold-rolled sheet having a thickness of 2.0 mm or less, preferably 1.6 mm or less. When the thickness of the sheet exceeds 2.0 mm, strain when passing through a line after annealing in a process grows, and the loss factor is reduced. Furthermore, so as to assure rigidity as a constructional element, the thickness of sheet is preferably over 0.5 mm. In ferromagnetic type damping alloy, the loss factor of a processed part deteriorates remarkably. Accordingly, very light working, in other words, working into a flat sheet structure which is mainly bending work is desirable. The thickness of ferromagnetic type damping alloy made into a largely flat sheet structure is preferably over 0.75 mm, and more preferably over 0.8 mm from the viewpoint of assuring rigidity.

A cold-rolled sheet after cold rolling is annealed so that the average grain diameter is 50 to 500 $\mu$m, and for that the sheet needs to be heated at a temperature no lower than the recrystallization temperature and lower than the $Ac_1$, transformation point. At a temperature lower than the recrystallization temperature, the plastic strain remains in a grain and the maximum permeability of 2,000 or more cannot be obtained. Also, at a temperature which is not lower than the $Ac_1$ transformation point, a two-phase ferrite-austenite region or a single-phase austenite region is produced, and strain is applied to a grain during its ferrite transformation while cooling, and so such temperature is not preferable. In addition, it is necessary to perform continuous annealing since tension control is necessary upon cooling as described below.

In order to reduce residual stress in a grain after recrystallization, in a process of cooling at the time of annealing, tension needs to be lowered. When the sheet is cooled while high tension is applied, since the magnetic domain structure freezes so that the stress in the direction of the tension is eased, the residual induction exceeds 0.90 T. Fig.1 shows the relationship between the tension while cooling and the loss factor. It can be seen that a high loss factor of 0.040 or more can be obtained if the tension is 4.9 MPa or less. Further, the steel sheet meanders in its path when its tension is greatly lowered, and thus the tension needs to be 0.1 MPa or more.

After annealing, it is desirable that leveling or temper rolling which may introduce plastic strain which will lower the maximum permeability is not conducted. However, leveling or mild temper rolling whereby the maximum permeability stays at 2,000 or more can be conducted. In addition, the surface of steel sheet can be plated with an element such as zinc, chromium, and nickel which improves corrosion resistance, as long as the maximum permeability is 2,000 or more and the residual induction of 0.90 T or less.

EXAMPLES

Example 1

A steel slab containing chemical composition within the range of the invention shown in Table 1 was reheated to 1, 100°C, hot-rolled at a finishing temperature of 850°C, pickled, and cold-rolled, resulting in a cold-rolled sheet having a thickness of 0.9mm. Then, the sheet was continuously annealed at 1,000°C for 2 minutes, and cooled to room temperature after changing the tension. The contents which were not any of chemical chemical composition shown in Table 1 were Fe and inevitable impurities, In particular, Nb, Ti, and Zr were each less than 0.001%. Furthermore, the recrystallization temperature was obtained by annealing a number of times with the temperature changed by 20°C in advance each time, and observing the composition after the annealing, and it was confirmed that 1,000(C is equal to or higher than the recrystallization temperature. Additionally, Ac1 transformation point was calculated by with thermodynamics, and it was confirmed that austenite transformation does not occur in this steel, that is, 1,000(C is lower than the Ac1 transformation point. A specimen which was 250 mm in length and 25 mm in width was cut out by machining from the steel sheet after cooling. The specimen was vibrated while being gripped over 50 mm of its length of grip, 200 mm of its length free to move, in the cantilever damping method in accordance with JIS G 0602, the vibration amplitude attenuation was measured with the use of a laser displacement meter. The loss factor was obtained by the following equation:

$$\text{Loss factor} = \ln(X_k/X_{k+1})/\pi$$

in which $X_k$ represents the amplitude of the $k^{th}$ vibration.

Further, the loss factor depends on the amount of deformation of a material upon vibration, so the greatest loss factor in the measurement was made the loss factor in each specimen. In addition, 4 strip specimens which were each 100 mm in length and 10 mm in width were cut out by machining, and their maximum permeability and residual induction (maximum exciting magnetic field 3183A/m) were measured by the Epstein method in accordance with JIS C 2550. In addition, the average grain diameter was measured by a cutting method in accordance with JIS G 0552.

The result is shown in Table 2. It is found that when the tension while cooling was 4.9 MPa or less, the maximum permeability was 2,000 or more and the residual induction was 0.90 T or less, and a high loss factor of 0.040 or more could be achieved. Meanwhile, the grain diameter was not affected by the tension, all of them being 180 $\mu$m.

Table 1

| Chemical Composition (mass %) | | | | | | | Notes |
|---|---|---|---|---|---|---|---|
| C | Si | Mn | P | S | Sol.Al | N | |
| 0.0022 | 0.50 | 0.11 | 0.005 | 0.004 | 2.50 | 0.0031 | * |
| * : Within Range of Invention | | | | | | | |

Table 2

| Tension (MPa.) | Maximum Permeability | Residual Induction (T) | Loss Factor | Notes |
|---|---|---|---|---|
| 0.2 | 6300 | 0.95 | 0.051 | Invention Example |
| 2.7 | 6700 | 0.87 | 0.048 | Invention Example |

(continued)

| Tension (MPa.) | Maximum Permeability | Residual Induction (T) | Loss Factor | Notes |
|---|---|---|---|---|
| 4.3 | 6800 | 0.89 | 0.045 | Invention Example |
| 6.7 | 7200 | 0.99 | 0.029 | Comparative Example |
| 10.4 | 7000 | 1.01 | 0.019 | Comparative Example |
| 12.7 | 6800 | 1.00 | 0.017 | Comparative Example |

Example 2

With respect to the steel sheets cooled to room temperature with tension of 0.2 MPa as in Example 1, which subsequently were not temper rolled (tension rate 0%) or were temper rolled with different tension, the loss factor, magnetic property, and average grain diameter were investigated in the same manner as in Example 1.

The result is shown in Table 3. When the tension rate was 2% or more, plastic strain was introduced into the grain, which lowered the maximum permeability, and thereby a loss factor of 0.040 or more could not be obtained. Meanwhile, the average grain diameter showed little dependence on the tension rate. All grain diameters were between 180 and 190 $\mu$m.

Table 3

| Tension Rate (%) | Maximum Permeability | Residual Induction (T) | Loss Factor | Notes |
|---|---|---|---|---|
| 0 | 6300 | 0.85 | 0.051 | Invention Example |
| 0.2 | 5400 | 0.74 | 0.042 | Invention Example |
| 2 | 1700 | 0.62 | 0.013 | Comparative Example |
| 5 | 1200 | 0.43 | 0.004 | Comparative Example |

Example 3

A steel slab containing chemical composition shown in Table 4 was reheated to 1,140°C, hot-rolled at a finishing temperature of 850°C, pickled, and cold-rolled, resulting in a cold-rolled sheet having a thickness of 1.2 mm. Then, the sheets A to F were each continuously annealed at 900°C for 1 minute, and cooled to room temperature while providing a tension of 0.2 MPa. The contents of the slab which were not any of chemical composition shown in Table 4 were Fe and inevitable impurities. In particular, Ti and Zr were each less than 0.001%. Furthermore, the recrystallization temperature and the $Ac_1$, deformation point were obtained in the same manner as in Example 1, and it was found that 900°C was equal to or higher than the recrystallization temperature and austenite transformation did not occur in this steel. With respect to the steel sheet after cooling, the loss factor, magnetic property, and grain diameter were investigated in the same manner as in Example 1.

The result is shown in Table 4. It was found that the cold-rolled sheets A, C, E, and F, which had element components within the scope of the invention, were excellent in grain growth and had high loss factors of 0.040 or more. On the other hand, the cold-rolled sheet B whose C and S contents were outside the range of the invention, and the cold-rolled sheet D whose C content was outside the range of the invention and Nb in which added were extremely poor in grain growth, and did not have high loss factors.

TABLE 4

| * | Chemical Composition (% by mass) | | | | | | | | Grain Diameter (μm) | Maximum Permeability | Residual Induction (T) | Loss Factor | Notes |
|---|---|---|---|---|---|---|---|---|---|---|---|---|---|
| | C | Si | Mn | P | S | Sol.Al | N | Nb | | | | | |
| A | 0.0023 | 0.10 | 0.13 | 0.005 | 0.001 | 4.30 | 0.0021 | <0.001 | 186 | 4500 | 0.54 | 0.065 | Invention Example |
| B | 0.0710 | 0.12 | 0.15 | 0.003 | 0.022 | 4.30 | 0.0035 | <0.001 | 43 | 1600 | 0.78 | 0.019 | Comparative Example |
| C | 0.0032 | 0.11 | 0.13 | 0.002 | 0.005 | 4.20 | 0.0034 | <0.001 | 134 | 4100 | 0.61 | 0.052 | Invention Example |
| D | 0.0120 | 0.10 | 0.11 | 0.004 | 0.008 | 4.30 | 0.0028 | 0.016 | 28 | 1100 | 0.91 | 0.011 | Comparative Example |
| E | 0.0028 | 1.50 | 0.13 | 0.003 | 0.004 | 0.04 | 0.0029 | <0.001 | 190 | 5800 | 0.71 | 0.053 | Invention Example |
| F | 0.0025 | 2.30 | 0.18 | 0.003 | 0.006 | 0.03 | 0.0031 | <0.001 | 200 | 7500 | 0.73 | 0.061 | Invention Example |

*: Cold-rolled Sheet

**Claims**

**1.** A damping alloy steel sheet having a thickness of 2.0 mm or less, comprising:

the following elements in the following respective concentrations in terms of mass; C: 0.005% or less, Mn: 0.05 to 1.5%, P: 0.2% or less, S: 0.02% or less, N: 0.005% or less, and at least one of Si: 1.0 to 3.5% and Sol. Al: 1.0 to 7.0%, with the remainder consisting of Fe and inevitable impurities; with
an average grain diameter of 50 to 500 $\mu$m;
a maximum permeability of 2,000 or more; and
a residual induction of 0.90 T or less.

**2.** A method for producing a damping alloy steel sheet having a thickness of 2.0 mm or less,
wherein steel containing the chemical composition according to Claim 1 is hot-rolled, pickled, cold-rolled, and heated at a temperature no lower than the recrystallization temperature and lower than the $Ac_1$ transformation point during continuous annealing, so as to produce grains with an average diameter of 50 to 500 $\mu$m; and then cooled under tension of 0.1 to 4.9 MPa to cause maximum permeability of 2,000 or more and residual induction of 0.90 T or less.

**Patentansprüche**

**1.** Dämpfungslegierungsstahlblech mit einer Dicke von 2,0 mm oder weniger, umfassend:

die folgenden Elemente in den folgenden jeweiligen Konzentrationen in Bezug auf die Masse: C: 0,005% oder weniger, Mn: 0,05 bis 1,5%, P: 0,2% oder weniger, S: 0,02% oder weniger, N: 0,005% oder weniger und mindestens eines von Si: 1,0 bis 3,5% und Sol. Al: 1,0 bis 7,0% mit einem Rest bestehend aus Fe und unvermeidlichen Verunreinigungen, mit
einem mittleren Korndurchmesser von 50 bis 500 $\mu$m,
einer Maximalpermeabilität von 2.000 oder höher, und
einer remanenten Induktion von 0,90 T oder niedriger.

**2.** Verfahren zur Herstellung eines Dämpfungslegierungsstahlblechs mit einer Dicke von 2,0 mm oder weniger, worin Stahl, der die chemische Zusammensetzung gemäß Anspruch 1 enthält, warmgewalzt, gebeizt, kaltgewalzt und bei einer Temperatur von nicht niedriger als die Rekristallisationstemperatur und nicht niedriger als der $Ac_1$-Umwandlungspunkt während des kontinuierlichen Glühens erwärmt wird, so dass Körner mit einem mittleren Durchmesser von 50 bis 500 $\mu$m erzeugt werden, und dann unter Spannung von 0,1 bis 4,9 MPa abgekühlt wird, um zu einer Maximalpermeabilität von 2.000 oder höher und einer remanenten Induktion von 0,90 T oder niedriger führen.

**Revendications**

**1.** Feuille d'acier d'alliage d'amortissement ayant une épaisseur de 2,0 mm ou moins, comprenant :

les éléments suivants dans les concentrations respectives en termes de masse : C : 0, 005 % ou moins, Mn : 0,05 à 1,5 %, P : 0,2 % ou moins, S : 0,02 % ou moins, N : 0,005 % ou moins et au moins l'un de Si : 1,0 à 3,5 % et de sol. d'Al : 1,0 à 7,0 %, le reste étant constitué de Fe et des impuretés inévitables ; avec
un diamètre moyen de grain de 50 à 500 $\mu$m ;
une perméabilité maximale de 2000 ou plus ; et
une induction résiduelle de 0,90 T ou moins.

**2.** Procédé de production d'une feuille d'acier d'alliage d'amortissement ayant une épaisseur de 2,0 mm ou moins, dans lequel l'acier contenant la composition chimique selon la revendication 1 est laminé à chaud, décapé, laminé à froid et chauffé à une température qui n'est pas inférieure à la température de recristallisation et est inférieure au point de transformation $Ac_1$ durant le recuit continu pour produire des grains avec un diamètre moyen de 50 à 500 $\mu$m ; puis refroidi sous tension de 0,1 à 4,9 MPa pour entraîner une perméabilité maximale de 2000 ou plus et une induction résiduelle de 0,90 T ou moins.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4099148 A
- JP 52073118 A
- JP 2002294408 A
- JP 2000096140 A
- JP 10140236 A
- JP 9143623 A
- JP 9176780 A
- JP 9104950 A